# EUROPEAN PATENT SPECIFICATION

(11) **EP 0 677 851 B1**
(45) Date of publication and mention of the grant of the patent: **01.10.1997**
(21) Application number: 94830170.0
(22) Date of filing: 13.04.1994
(51) Int. Cl.: G21C 15/18, F28B 9/10, F28B 9/08

(54) **A condenser for steam mixed with non-condensable gases, operating with natural circulation, for nuclear reactor protection systems**
Kondensator für mit unkondensierbaren Gasen gemischten Dampf, ausgelegt für Naturumlauf in Kernreaktorschutzsystemen
Condenseur de vapeur mélangée à des gaz incondensables, fonctionnant en circulation naturelle, pour systèmes de protection de réacteur nucléaire

(43) Date of publication of application: 18.10.1995
(73) Proprietor: FINMECCANICA S.p.A. AZIENDA ANSALDO, I-16128 Genova (IT)
(72) Inventor: Magris, Flavio, I-16036 Recco - Genova (IT); Rizzo, Franco Luigi, I-16146 Genova (IT)
(74) Representative: Perani, Aurelio

(56) References cited:
- EP-A- 0 359 716
- US-A- 5 285 843
- PATENT ABSTRACTS OF JAPAN vol. 17, no. 265 (P-1542) 24 May 1993 & JP-A-05 005 794 (TOSHIBA CORP) 14 January 1993
- DATABASE WPI Section Ch, Week 8947, 10 January 1990 Derwent Publications Ltd., London, GB; Class J, AN 89-346498 & SU-A-1 456 736 (AS BELO NUCLEAR POW) 7 February 1989
- PATENT ABSTRACTS OF JAPAN vol. 5, no. 10 (M-51) (682) 22 January 1981 & JP-A-55 140 093 (BABCOCK HITACHI) 1 November 1980
- PATENT ABSTRACTS OF JAPAN vol. 12, no. 272 (M-724) (3119) 28 July 1988 & JP-A-63 054 594 (BABCOCK HITACHI) 8 March 1988
- PATENT ABSTRACTS OF JAPAN vol. 14, no. 581 (P-1147) 26 December 1990 & JP-A-02 251 795 (TOSHIBA CORP) 9 October 1990

## Description

The subject of the present invention is an innovative condensation apparatus for steam mixed with non-condensable gases, operating with natural circulation, for limiting the excess pressures which arise in the primary container (PC) or containment housing of a nuclear reactor of the boiling-water (BWR) type, as a result of an accidental event involving loss of the primary coolant (a loss of coolant accident).

As is known, nuclear reactors of the BWR type, which use steam at high pressure as a vehicle for transferring heat, the steam being confined under pressure in containers and pipes of the plant, are constructed in a manner such that all or most of the components of the plant which are under pressure are housed in a containment housing designed and constructed to withstand the internal pressures which would develop if all the fluid contained in the plant under pressure were discharged therefrom in the vapour state.

The pressure peak in the moments immediately following the incident is limited in a passive manner by conveying the steam into a pool known as the suppression pool, inside the container and in which pool the condensation takes place. As disclosed in JP-A-2251795 the suppression pool may be cooled, at some extent, by natural circulation of fluid induced in a heat exchanger immersed in the suppression pool and communicating with an external cooling pool.

The effectiveness of this solution in promptly limiting pressure surges is low because the vapour condensation heat is transferred outside the container through an indirect thermal exchange involving two media: the water in the suppression pool and the liquid in the heat exchanger.

In the medium and long term, it is always necessary, in association with this passive protection, to have active protection systems which intervene by the activation of valves and systems for pumping and spraying water, the purpose of which is to cool the atmosphere and cause the steam dispersed within the primary container to condense whilst keeping the pressure existing therein within predetermined limits.

Active systems always require the detection of anomalous conditions and the intervention of protection devices brought about by control means. They then require a rapid discharge of the thermal content of the dispersed steam out of the primary container. They are therefore complex systems which are always subject, to some extent, to the risk of breakdown whereas, in nuclear plants, it is desirable to operate with systems in which the risk of breakdown or failure is virtually zero.

It is therefore desirable to provide passive systems which operate without the need for instrumental intervention and overcomes the prior art limitations.

This objective is achieved by a protection system which, according to the present invention, uses a heat-exchanger which may be called "a condensation apparatus for the passive cooling of the container by natural circulation of condensation fluid". This exchanger largely avoids the need to use active systems and condenses any vapour dispersed in the main container by conveying it by gravity into a cooling pool by a wholly passive operation.

According to the invention as set out in claim 1, the condensation apparatus is constituted by a heat-exchanger immersed in a pool at atmospheric pressure, outside and above the primary container. The exchanger is supplied by a line which is in direct communication with the interior of the primary container and is discharged, by means of a condensate-discharge duct, directly into the primary container, within a cooling pool.

The operation of the exchanger is wholly passive and is brought about exclusively by the presence of steam in the primary container.

Since the exchanger is disposed outside the primary container and is immersed in a pool which is in direct communication with the atmosphere, clearly there is a need to reduce the extent of the containment barrier outside the primary container and to minimize the probability of its breakage.

These requirements imposed on the exchanger, for its location in the protection system according to the invention, are satisfied by a particular design of the exchanger which, at the same time, ensures maximum functional efficiency, structural strength, and resistance to temperature changes, and is based on a plurality of measures listed briefly below:
- an exchanger structure with several identical vertical modules which are supplied by lines with cross-sections such as to minimize the pressure-drops during normal operation and are disposed symmetrically about a vertical axis,
- modules each having an upper, horizontal, cylindrical manifold coupled to a lower, horizontal cylindrical manifold by a vertical array of pipes,
- cylindrical manifolds formed as single forged pieces,
- a single penetration of the primary container for recovering the condensate and discharging the non-condensable gases,
- restraint and support of the modules achieved in a manner such as to allow for thermal expansion of the various elements under the various operative conditions whilst, at the same time, maintaining an adequate level of restraint with respect to vibrations and stresses of external origin.

The characteristics and advantages of the invention will become clearer from the following description of a preferred embodiment and from the appended drawings, in which:
Figure 1 shows schematically a BWR nuclear plant (a boiling-water reactor) incorporating the condensation apparatus, with its heat-exchanger, according to the present invention,
Figure 2 is a vertical section of the exchanger according to the invention showing its location within the plant,
Figure 3 is a longitudinal section of the exchanger taken in the plane I-I of Figure 4,
Figure 4 is a view of the component taken in the plane II-II of Figure 3,
Figure 5 is a longitudinal section taken in the plane IV-IV of Figure 4, of an upper exchanger manifold, showing its unitary construction with integral flanges and inlet,
Figure 6 is a transverse section of a lower manifold of the exchanger taken in the plane III-III of Figure 4, showing the outlet for the condensate/non-condensable gases,
Figure 7 and Figure 8 (which is a section taken in the plane V-V of Figure 7) show the lower support system of a manifold of the exchanger.

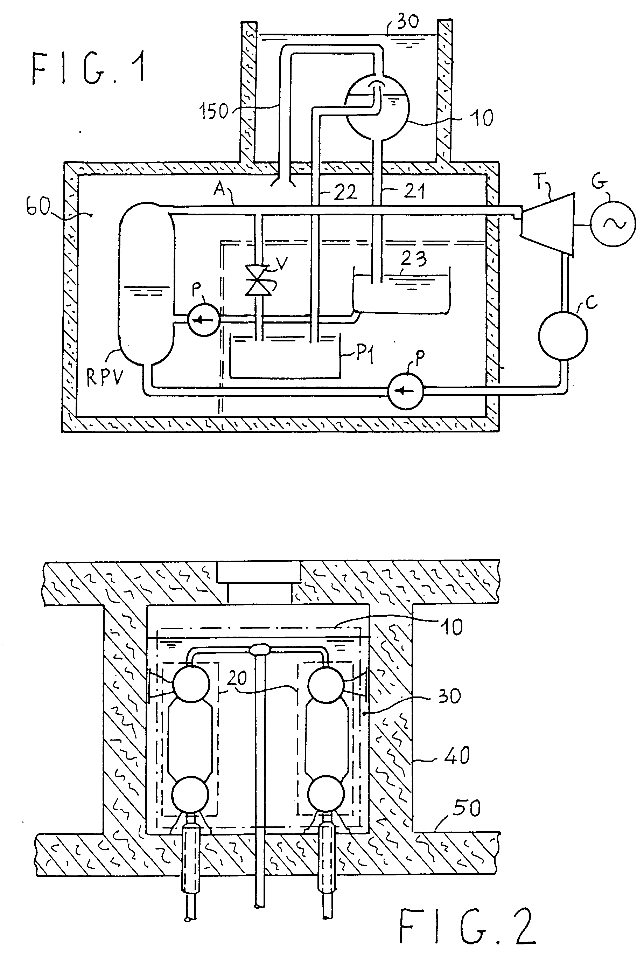

With particular reference to Figure 1, a nuclear plant, particularly of the BWR type, comprises a very strong primary container 60 which is normally at atmospheric pressure but can withstand the excess internal pressures which would arise in the event of an accident.

The primary container houses the essential components of the nuclear plant, a reactor pressure-vessel (RPV) in which the nuclear reaction brings about the boiling of a fluid under pressure (water), and protection equipment.

The steam developed in the RPV is conveyed by a duct A to a turbine T coupled to an electrical generator G.

The steam output at low pressure by the turbine T is condensed in a condenser C and the condensed liquid is re-admitted to the vessel RPV by means of a pump P.

A safety valve V allows steam to be discharged from the duct A into a vapour-suppression pool P1 where it is condensed, in the event of excess pressures in the system resulting, for example, from a stoppage of the turbine. In normal operating conditions, the interior of the primary container 60 is at atmospheric pressure. In the event of an accident such as the rupture of high-pressure steam pipes, the steam under pressure in the circuit disperses in the primary container, increasing its internal pressure. These excess pressures have to be prevented.

In the short term, the atmosphere in the primary container, which is saturated with steam, is conveyed passively under a hydrostatic head into the vapour-suppression pool P1, where the steam condenses. In the medium and long term, the control of the pressure in the container is conventionally entrusted to the intervention of complex active systems constituted by pumps and valves.

The efficiency and rapidity of this intervention is affected by the dimensions of the pumping systems and the timely operation of the systems for detecting excess pressure and activating the protection devices, which, although they are normally inactive, require continual maintenance and checks.

According to the invention, in order to avoid these problems and to reduce the risk of failure virtually to zero, a heat-exchanger 10 is provided, immersed in a pool 30 disposed outside and above the primary container. The pool is at atmospheric pressure and ambient temperature.

The heat-exchanger 10 is in direct communication with the interior of the primary container by means of a feed pipe 150 and discharges the condensed liquid into a pool 23 inside the primary container by means of a discharge pipe 21 the end of which is immersed in the pool 23.

A second pipe 22 connects the interior of the exchanger 10 to the interior of the primary container, discharging the fluid drawn in (non-condensable gases) into the vapour-suppression pool P1 which is housed in a lower region of the primary container.

The passive operation of the exchanger takes place as follows.

In normal running conditions, steam is present in the primary container in negligible quantities and the condensation phenomena which take place within the exchanger 10 are negligible. The protection system is therefore inactive.

In the event of an accident and hence an increase in the concentration of steam in the primary container, and increased internal pressure and temperature, the steam diffuses through the feed pipe 150 into the exchanger 10 and is condensed. This brings about a local pressure drop and the drawing of more steam from the primary container through the feed pipe 150 with a flow-rate such that the pressure-drops in the pipe equal the vacuum in the exchanger.

The discharge pipe 21 does not take in steam, but only discharges condensate because the pipe 21 terminates under a hydrostatic head.

An operating condition in which there is a unidirectional flow of steam from the primary container to the exchanger and of condensed liquid from the exchanger to the pool 20 is thus established.

The wholly natural operation of the protection system must, however, take account of the presence of non-condensable gases in the atmosphere of the primary container. In the long term, these gases would greatly reduce the effectiveness of the protection system.

In fact, the flow of steam towards the exchanger 10 also conveys into the exchanger non-condensable gases which accumulate therein. The condensation thus affects an ever smaller fraction of the aeriforms present in the exchanger and brings about an ever more negligible reduction in the volume of the aeriforms, and hence an ever-decreasing local vacuum and a corresponding ever more limited flow.

In order to prevent this problem, as shown in Figure 1, a pipe 22 is provided for taking in the non-condensable gases present in the exchanger and conveying them to the suppression pool Pl, where the fraction of residual steam present in the mixture of gases is condensed.

The discharge system, the purpose of which is to drain off the non-condensabie gases and to ensure the effectiveness of the exchanger in emergency conditions, operates in a passive manner by virtue of the pressure differences created between the various regions in the primary container, particularly the main region and the region in which the suppression pool is disposed.

The operation of the condensation apparatus of the invention having been described, it is appropriate to point out the various technical problems which have to be solved in order for the system to be effective and practical.

During the normal operation of the reactor, the condenser, which is immersed in the external pool 30, is inactive and is at the temperature of the pool water and at the internal pressure of the primary container, which is atmospheric pressure.

In the event of an intervention, the internal pressure increases and steam passes through the system at a high temperature (about 150 °C).

The most important aspects in connection with the working condition are:
1. the transient thermal state to which the component is subject,
2. the consequent thermal expansion of the various elements, particularly when the water in which the component is immersed reaches boiling point,
3. the increase in internal pressure,
4. the establishment of a natural circulation based on the equilibrium between pressure-drops on the steam side and the condensation flow-rate, the efficiency of which requires exchange bodies with considerable performance and short feed pipes of considerable cross-section.

The first aspect is addressed and solved by the modularity concept which permits the use of smaller, thinner components which are therefore less sensitive to the effects of transient thermal conditions.

The problems connected with thermal expansion are solved by supports of a particular type which ensure resistance to possible external stresses and, at the same time, permit expansion in preferred directions.

The problems connected with the increase in internal pressure and the need to extend the protection barrier outside the primary container are solved, in addition to the use of modularity, by the use of structural elements formed as weld-free forged pieces and by reducing the number of penetrations affecting the shield of the primary container and the number of openings affecting the exchanger modules.

As far as the fourth aspect is concerned, natural circulation is favoured by minimizing the lengths of the feed pipes to the exchange modules and by the use of exchange modules each constituted by an upper steam manifold, a vertical array of pipes, and a lower condensate manifold, the geometrical arrangement of the installation also ensuring an optimal result in terms of flexibility (for the thermal aspects) and rigidity (for the vibrational aspects.

These aspects are shown in detail in Figures 2 to 8.

In Figure 2, the exchanger, indicated by the chain line 10, is constituted by two identical modules 20 (indicated by broken lines) which are immersed in the pool 30 defined by the walls 40 and disposed above the slab 50 which constitutes the limit of the primary container 60.

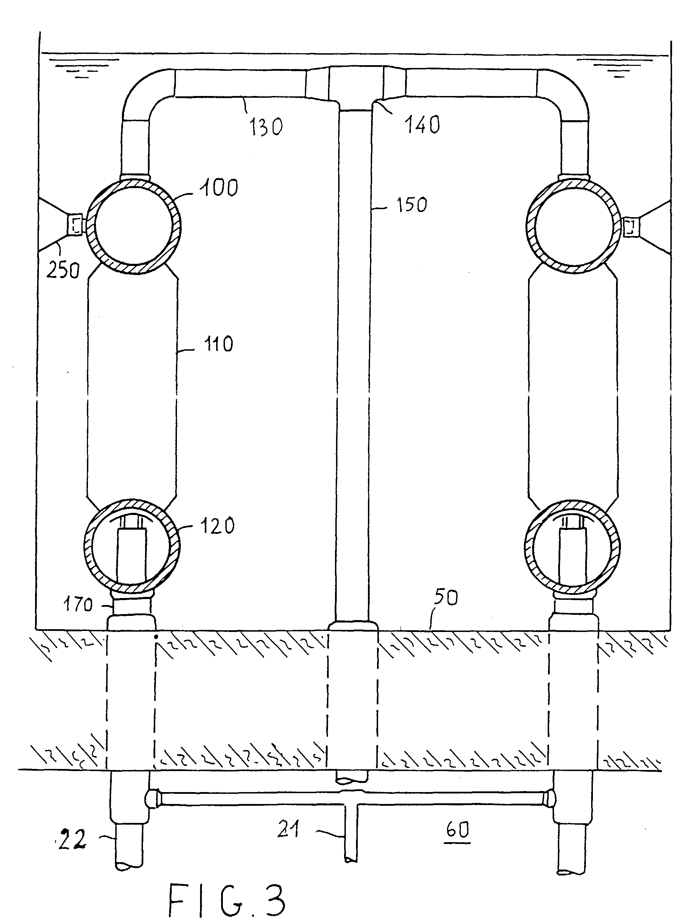

With reference to the subsequent Figures 3 to 7, each exchange module is constituted by an upper manifold 100, by a vertical array of pipes 110, and by a lower manifold 120.

Each manifold 100 is closed at its ends by two covers 200 and is supplied by a line 130 extending from a "T"-shaped distributor 140 which in turn is connected to the main steam line 150. The latter is in direct communication with the atmosphere of the primary container 60 through the slab 50 which defines the PC. Its length is limited essentially to the vertical dimension of the exchange modules.

The drainage lines 170 of each lower manifold 120 extend through the slab 50 and then combine in a main line 21 which is connected to the pool. The pipe 22 for collecting non-condensable gases also extends through the same entry, inside the condensate pipe 170, and separates inside the primary container to extend into the vapour-suppression tank. The upper manifolds 100 are restrained from movement in the horizontal plane by a support 250 with a guide which allows however, the exchange pipes to expand upwardly during the operation of the equipment.

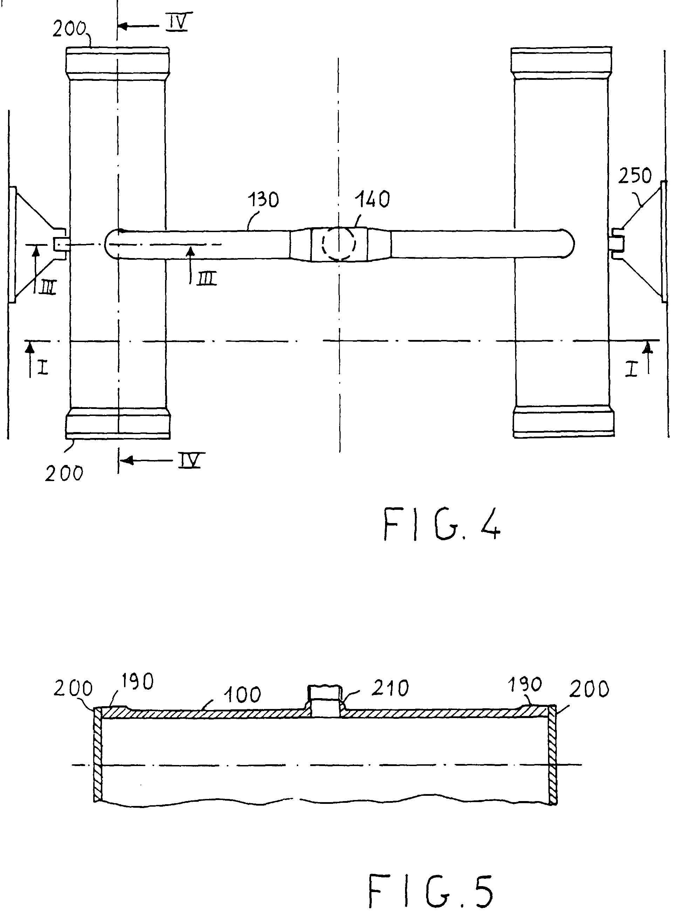

With reference to Figure 5, the manifolds 100 and 120 are constructed as single, weld-free pieces, including the flanges 190 for the covers 200 and either inlets 210 or outlets 220.

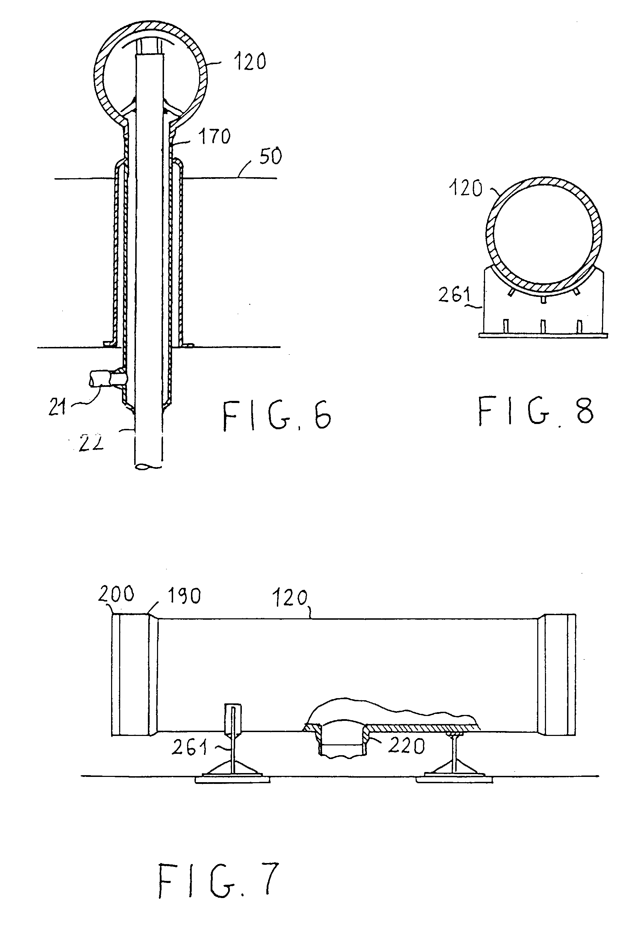

With reference to Figures 7 and 8, the system for supporting the lower manifolds 120 is constituted by two seats 261 the design of which achieves effective restraint with respect to vibrations of the component, but allows the manifolds to expand along their axes.

Clearly, the foregoing description relates solely to a preferred embodiment and many variations may be introduced in implementing the invention, without departing from the scope of the appended claims.

In particular, the modularity concept may be extended to exchangers constituted by four modules disposed symmetrically about a central axis on which the main steam line 150 may be disposed.

## Claims

1. A system, for protecting a region in which a loss of steam from a plant brings about excess pressure to be limited, comprising a condensation apparatus for steam mixed with non condensable gases, operating with natural circulation, characterised in that said condensation apparatus includes:
- a heat-exchanger (10) immersed in a pool (30) at atmospheric pressure outside and above the region (60) to be protected,
- a permanently-open inlet line (150) which puts the exchanger (10) into communication with the region 60,
- a permanently-open drainage line (21) which puts the exchanger (10) into communication with the region (60), the drainage line terminating under a hydrostatic head in a first pool (23) in the region, and
- a line (22) for taking in non-condensable gases from the exchanger, the line (22) terminating under a hydrostatic head in a second pool (P1) which is at a lower pressure than the region (60), the exchanger (10) comprising a plurality of exchange modules (20).

2. A condensation apparatus as in claim 1, wherein said modules (20) are identical each to the other, disposed symmetrically with respect to a vertical axis, on which said inlet line (150) is disposed and each of which is formed by an upper manifold (100), a vertical array of pipes (110), and a lower manifold (120).

3. A condensation apparatus according to Claim 2, in which there are two modules.

4. A condensation apparatus according to one of the preceding claims, in which the upper (100) and lower (120) manifolds of each module (20) are constituted by cylindrical, forged pieces comprising end flanges and a steam inlet (210) and a condensate outlet (220), respectively.

5. A condensation apparatus according to one of the preceding claims, in which the condensed steam and the non-condensable gases are discharged through two concentric pipes (21,22) extending through a single outlet (170) of each of said lower manifolds (120).

6. A condensation apparatus according to one of the preceding claims, comprising a pair of support seats (261) for each of the lower manifolds (120), the seats permitting thermal expansion of the lower manifolds.

7. A condensation apparatus according to one of the preceding claims, comprising a restraint (250) with a slide with one degree of freedom for each of the upper manifolds (100) in order to allow vertical travel of the manifolds due to thermal expansion of the modules.

## Patentansprüche

1. System zum Schutz eines Bereiches, in dem ein Dampfverlust eines Kraftwerks einen zu begrenzenden Überdruck verursacht, umfassend eine Kondensationsvorrichtung für mit unkondensierbaren Gasen gemischtemDampf, welche für Naturumlauf ausgelegt ist,
**dadurch gekennzeichnet,**
daß die Kondensationsvorrichtung umfasst:
- einen Wärmeaustauscher (10), der in einem Pool (30) versenkt ist, der dem Atmosphärendruck ausgesetzt und außerhalb sowie oberhalb des zu schützenden Bereiches (60) angeordnet ist,
- eine stets durchlässige Zufuhrleitung (150), durch die der Austauscher (10) in Verbindung mit dem Bereich (60) steht,
- eine stets durchlässige Entwässerungsleitung (21), durch die der Austauscher (10) in Verbindung mit dem Bereich (60) steht, wobei die Entwässerungsleitung in einem in dem Bereich vorhandenen ersten Pool (23) unterhalb einer hydrostatischen Druckhöhe endet, und
- eine Leitung (22) zur Entnahme unkondensierbarer Gase von dem Austauscher, wobei die Leitung (22) in einem zweite Pool (P1), der einem niedrigeren Druck als der Bereich (60) ausgesetzt ist, unterhalb einer hydrostatischen Druckhöhe endet, wobei der Austauscher (10) eine Vielzahl von Austauschmodulen (20) umfasst.

2. Kondensationsvorrichtung nach Anspruch 1,
wobei die Module (20) identisch aufgebaut und symmetrisch zu einer vertikalen Achse, auf der die Zufuhrleitung (150) angeordnet ist, angeordnet sind, und wobei jedes Modul aus einem oberen Verteilerrohr (100), einer vertikalen Rohranordnung (110) und einem unteren Verteilerrohr (120) besteht.

3. Kondensationsvorrichtung nach Anspruch 2,
wobei zwei Module vorhanden sind.

4. Kondensationsvorrichtung nach einem der vorhergehenden Ansprüche,
wobei die oberen (100) und unteren (120) Verteilerrohre jedes Moduls (20) durch zylinderförmige geschmiedete Teile gebildet sind, die Endflansche sowie einen Dampfeinlaß (210) bzw. einen Kondensatauslaß (220) aufweisen.

5. Kondensationsvorrichtung nach einem der vorhergehenden Ansprüche,
wobei der kondensierte Dampf sowie die unkondensierbaren Gase über zwei konzentrische Rohre (21, 22) abgeführt werden, die sich durch einen einzigen Auslaß (170) eines jeden unteren Verteilerrohres (120) erstrecken.

6. Kondensationsvorrichtung nach einem der vorhergehenden Ansprüche,
umfassend ein Stützaufnahmepaar (261) für jedes untere Verteilerrohr (120), wobei die Aufnahmen eine Wärmeausdehnung der unteren Verteilerrohre zulassen.

7. Kondensationsvorrichtung nach einem der vorhergehenden Ansprüche,
umfassend eine Halterung (250) mit einem Schieber mit einem Freiheitsgrad für jedes obere Verteilerrohr (100), um eine vertikale Bewegung der Verteilerrohre aufgrund einer Wärmeausdehnung der Module zu ermöglichen.

## Revendications

1. Système pour protéger une zone dans laquelle une perte de vapeur d'eau d'une centrale entraîne un excès de pression qu'il faut limiter, comprenant un appareil de condensation pour de la vapeur mélangée à des gaz non condensables, opérant en circulation naturelle, caractérisé en ce que ledit appareil de condensation comprend :
- un échangeur de chaleur (10) immergé dans un bassin (30) à la pression atmosphérique, à l'extérieur et au-dessus de la zone (60) à protéger,
- une conduite d'entrée (150) ouverte en permanence qui met l'échangeur (10) en communication avec la zone (60),
- une conduite de drainage (21), ouverte en permanence, qui met l'échangeur (10) en communication avec la zone (60), la conduite de drainage se terminant sous une charge hydrostatique dans un premier bassin (23) de la zone, et
- une conduite (22) pour évacuer les gaz non condensables de l'échangeur, la conduite (22) se terminant sous une charge hydrostatique dans un deuxième bassin (P1) qui est soumis à une pression inférieure à celle de la zone (60), l'échangeur (10) comprenant une série de modules d'échange (20).

2. Appareil de condensation selon la revendication 1, dans lequel lesdits modules (20) sont identiques les uns aux autres et disposés symétriquement vis-à-vis d'un axe vertical, sur lequel ladite conduite d'entrée (150) est disposée, chacun d'eux étant formé d'un collecteur supérieur (100), d'un réseau vertical de tubes (110) et d'un collecteur inférieur (120).

3. Appareil de condensation selon la revendication 2, dans lequel il y a deux modules.

4. Appareil de condensation selon l'une quelconque des revendications précédentes, dans lequel les quelconque des revendications précédentes, dans lequel les collecteurs supérieur (100) et inférieur (120) de chaque module (20) sont constitués de pièces cylindriques forgées comprenant des brides d'extrémité, une entrée de vapeur d'eau (210) et une sortie de condensat (220) , respectivement.

5. Appareil de condensation selon l'une quelconque des revendications précédentes, dans lequel la vapeur d'eau condensée et les gaz non condensables sont déchargés par deux tubes concentriques (21, 22) s'étendant à travers une sortie unique (170) de chacun desdits collecteurs inférieurs (120).

6. Appareil de condensation selon l'une quelconque des revendications précédentes, comprenant deux sièges de support (261) pour chacun des collecteurs inférieurs (120), les sièges permettant une dilatation thermique des collecteurs inférieurs.

7. Appareil de condensation selon l'une quelconque des revendications précédentes, comprenant un dispositif de retenue (250) avec un coulisseau à un degré de liberté pour chacun des collecteurs supérieurs (100) afin de permettre le déplacement vertical des collecteurs dû à la dilatation thermique des modules.
